# EUROPEAN PATENT APPLICATION

(11) **EP 3 141 403 A1**
(43) Date of publication of application: **15.03.2017**
(21) Application number: 15846524.5
(22) Date of filing: 09.06.2015
(51) Int. Cl.: B60C 11/02

(54) **MEANS FOR ATTACHING A DETACHABLE TREAD TO A PNEUMATIC TYRE**

(30) Priority: 30.09.2014 RU 2014139227
(71) Applicant: Sidorov, Aleksandr Konstantinovich, Moscow 115522 (RU); Sidorov, Maksim Aleksandrovich, St.Petersburg 197375 (RU)
(72) Inventor: Sidorov, Aleksandr Konstantinovich, Moscow 115522 (RU); Sidorov, Maksim Aleksandrovich, St.Petersburg 197375 (RU)
(74) Representative: Lapienis, Juozas
(86) International application number: PCT/RU2015/000361
(87) International publication number: WO 2016/053137

(57) **Abstract**

The invention relates to detachable treads and can be used for lorries and motor cars. A tread device is in the form of an annular cover with alternating projections and depressions on the outside surface and a structure which is similar to the structure of a pneumatic tyre, and comprises a breaker, a cord and a means for fastening the detachable tread to the tyre. A vacuum fastening means consists of two parts - an anchoring base having a housing which is embedded in the body of the tread and has a flange with an overall size equal to or exceeding the size of the cross section of the housing. At its free end, the flange has the shape of any geometrical figure, while the end of the housing is arranged level with the inside surface of the tread or projecting beyond said surface until adjacent to the breaker and a cup-shaped vacuum clip, which is adjacent to the inside surface of the tyre. The anchoring base and the vacuum clip are interconnected. The cavity of the anchoring base has a hermetic sealing means. The vacuum fasteners are arranged at regular intervals from the vertical plane of symmetry of the tyre. The technical effect is more reliable fastening of a detachable tread to a tyre and an increase in the service life of the tyre.

## Description

### Background of the Invention

The invention relates to transport engineering, in particular to pneumatic tyres, namely - to detachable treads and can be used for tyres of lorries, motor cars, buses and tractors.

### Prior Art

From the data available before the priority date of the technical solution as claimed, the following means is known to be used for the same purpose:
A means for attaching a detachable tread to a pneumatic tyre in the form of an annular cover with alternating projections and depressions on the outside surface and a structure similar to the structure of a pneumatic tyre comprising a breaker, a cord and a means for fastening the detachable tread to the tyre (RF patent RU 965,064, IPC B60S11/02,20.07.2010).

This technical solution is the closest one to the technical substance and the purpose of the device as claimed and therefore is chosen as a prototype.

Among the prototype drawbacks there are low reliability of the fastening of a detachable tread to a tyre and limited service life of the tyre.

### Summary of the Invention

The technical effect of the device in use is more reliable fastening of a detachable tread to a tyre and an increase in the service life of the tyre.

The following are general and specific features characterizing the causal relationship of the technical solution with the specified technical effect.

A means for attaching a detachable tread to a pneumatic tyre in the form of an annular cover with alternating projections and depressions on the outside surface and a structure similar to the structure of a pneumatic tyre, comprising a breaker, a cord. The means is provided as a vacuum fastener consisting of two parts - an anchoring base having a housing which is embedded in the body of the tread and has a flange with an overall size equal to or exceeding the size of the cross section of the housing. At its free end, the flange has the shape of any geometrical figure. The end of the housing is arranged level with the inside surface of the tread or projecting beyond said surface until adjacent to the breaker and a cup-shaped vacuum clip, which is adjacent to the inside surface of the tyre. The anchoring base and the cup-shaped vacuum clip are provided with vacuum cavities opening towards each other and interconnected through radial hole within the couples "anchoring base - cup-shaped vacuum clip". The cavity of the latter is provided with a hermetic sealing means in the form of a pneumatic lock activated after removing the air out of the vacuum cavities of the anchoring base and the cup-shaped vacuum clip.

The vacuum fasteners of either straight or polygonal cross section of the tyre are arranged at regular intervals from the vertical plane of symmetry of the tyre. The anchoring base may be embedded in the body of the tread depressions or in the body of the tread projections or it may be embedded both in the body of the depressions and the projections in their optional combination. The anchoring base is arranged in the body of the tread projections or depressions along the tread pattern lines. Said pneumatic lock may be performed as a tube of flexible material configured to prevent the air access into said vacuum cavities after its mechanical deformation. Said pneumatic lock may be performed as a solid plug of flexible material configured to be pierced with a vacuum pump needle with subsequent covering of the piercing with flexible material after removing the air and the needle. Said plug may be performed in the form of a truncated cone converging toward the vacuum clip or with a shoulder at the outer end of the vacuum clip. Said flange and the vacuum clip have projections mirrored on a plane, transversal to the vacuum fastener axis. The inner surfaces of the anchor base and the vacuum clip oriented to each other have a curved profile in the longitudinal section plane of the tyre. The outer surfaces of the anchor base and the vacuum clip may be performed as texturized.

### Drawings

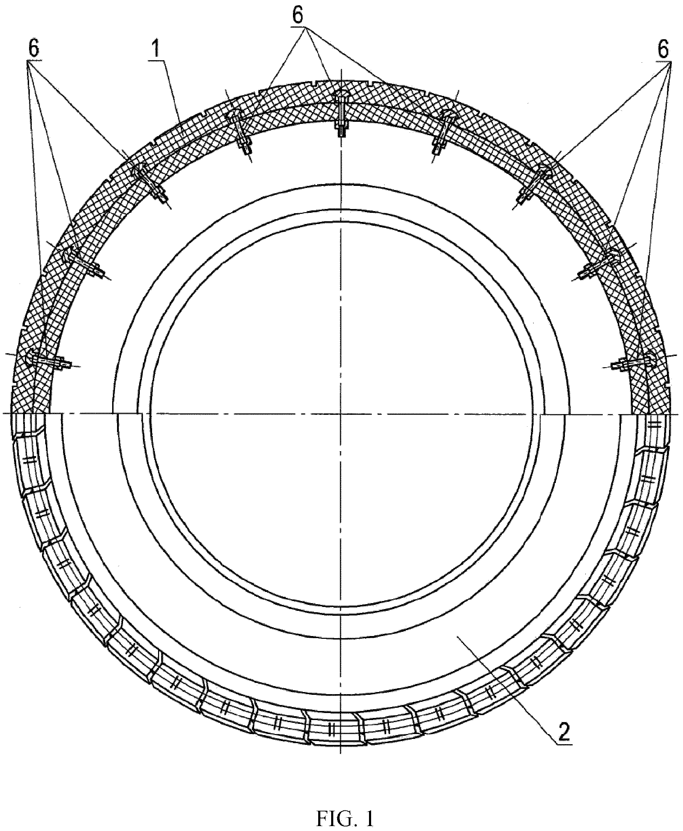

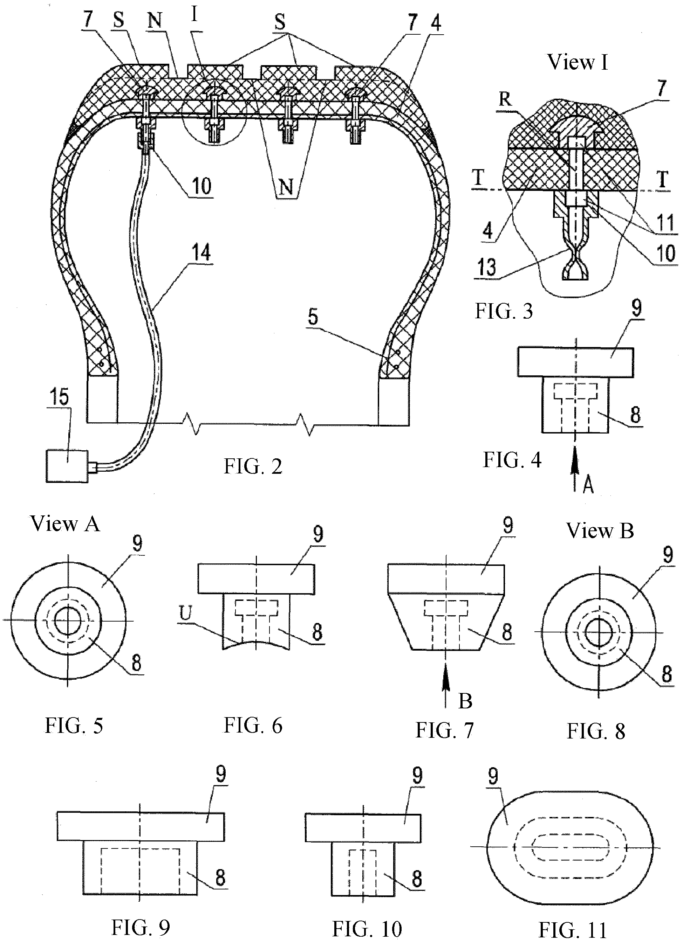

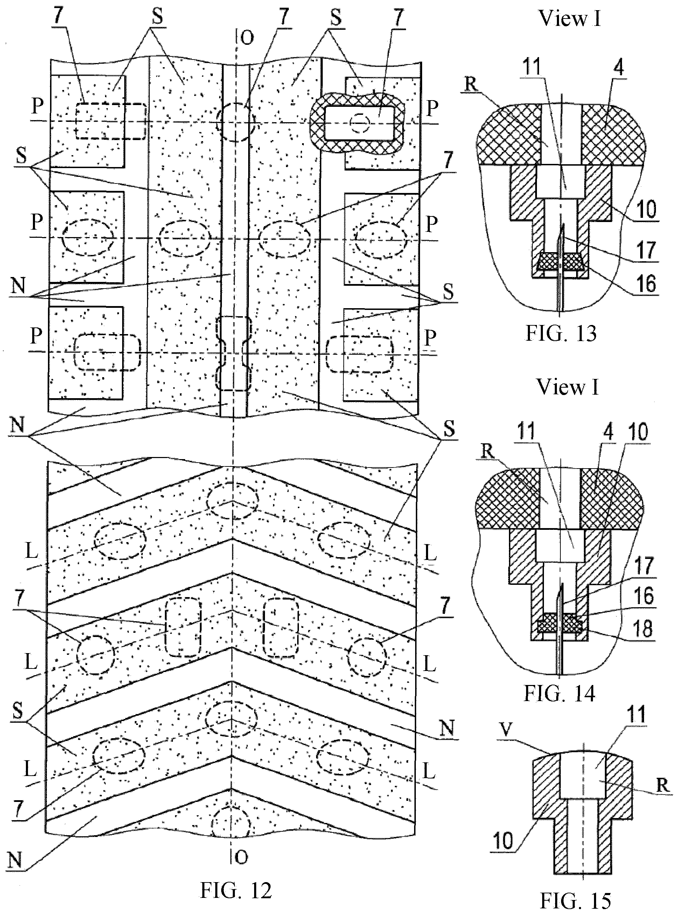

The invention is illustrated by drawings, where: Fig. 1 is a partial longitudinal sectional view of the tyre with a detachable tread; Fig. 2 is a cross section of the tire; Fig. 3 is a view I of Fig. 2; Fig. 4 is a front view of an embodiment of the anchoring base; Fig. 5 is a view A of Fig4; Fig. 6 is a front view of an embodiment of the anchoring base; Fig. 7 is a side view of an embodiment of the anchoring base; Fig. 8 is a view B of Fig. 7; Fig. 9 is a side view of an embodiment of the anchoring base; Fig. 10 is a front view of an embodiment of the anchoring base; Fig.11 is a plan view of an embodiment of anchoring base; Fig. 12 is a variant for the anchoring bases to be arranged on a detachable tread; Fig. 13 is an embodiment of a plug for the cup-shaped vacuum clips; Fig. 14 is an embodiment of a plug for the cup-shaped vacuum clips; Fig. 15 is an embodiment of a vacuum clip.

### Embodiment of the Invention

A means for attaching a detachable tread 1 to a pneumatic tyre 2 in the form of an annular cover with alternating projections S and depressions N on the outside surface and a structure similar to the structure of a pneumatic tyre 2, comprising a breaker 4, a cord 5 and a means for fastening the detachable tread 1 to the tyre 2.

The fastening means is a vacuum fastener 6 consisting of two parts: an anchoring base 7 having a housing 8 which is embedded in the body of the tread and has a flange 9 with an overall size equal to or exceeding the size of the cross section of the housing 8.

At its free end, the flange 9 has the shape of any geometrical figure, while the end of the housing 8 is arranged level with the inside surface of the tread 1 or projecting beyond said surface until adjacent to the breaker 4 and a cup-shaped vacuum clip 10, which is adjacent to the inside surface of the tyre 2.

The anchoring bases 7 and the cup-shaped vacuum clips 10 are provided with vacuum cavities 11 opening towards each other and being interconnected through radial holes K within the couples "anchoring base - cup-shaped vacuum clip".

The cavity of the latter is provided with a hermetic sealing means in the form of a pneumatic lock activated after removing the air out of the vacuum cavities 11 of the anchoring bases 7 and the cup-shaped vacuum clips 10.

The vacuum fasteners 6 of either straight (radially transversal) P-P or polygonal L-L cross section of the tyre 2 are arranged at regular intervals from the vertical plane 0-0 of symmetry of the tyre.

The anchoring base 7 may be embedded in the body of the tread depressions N or in the body of the tread 1 projections S or it may be embedded both in the body of the depressions N and the projections S in their optional combination.

The anchoring base 7 is arranged in the body of the tread 1 depressions N or projections S along the tread pattern lines.

Said pneumatic lock may be performed as a tube 13 of flexible material, through which air is pumped out with a vacuum pump 15 by means of a hose 14.

The tube 13 is configured to prevent the air access into said vacuum cavities 11 after its mechanical deformation.

Said pneumatic lock may be performed as a solid plug 16 of flexible material configured to be pierced with a vacuum pump needle 17 with subsequent covering of the piercing with flexible material after removing the air and the needle 17.

Said plug 16 may be performed in the form of a truncated cone converging toward the vacuum clip 10 (Fig. 13) or with a shoulder 18 at the outer end of the vacuum clip 10 (Fig. 14).

Said flange 9 and the vacuum clip 10 have projections mirrored on a plane T-T, transversal to the vacuum fastener 6 axis.

The inner surfaces of the anchor base 7 and the vacuum clip 10 oriented to each other may have a curved profile in the longitudinal section plane of the tyre: a concave one U of the anchoring base 7 (Fig. 7) and a convex one V of the vacuum clip 10 (Fig. 15) and their outer surfaces may be performed as texturized.

Comparison of the technical solution as claimed to the prior art known from the scientific, technical and patent documentation on the priority date of the main heading and the related ones has revealed no means exhibiting features identical to all the features contained in the claims of the invention suggested by the Applicant, including the purpose characteristic.

That is, the set of essential features of the solution as claimed has not been previously known and is not identical to any known technical solutions, therefore, it satisfies such a condition of patentability as "novelty".

### Industrial Applicability

This technical solution is industrially applicable, as its purpose is specified in the description of the application and the title of the invention, it can be manufactured and used for detachable treads, being efficient, feasible and reproducible, and the device characteristics make it possible to obtain the specified technical result lying in more reliable fastening of a detachable tread to a tyre and an extended service life of the tyre.

The invention in the form as it is described in each of the claims may be implemented by means and methods described in the prior art, that has become accessible to the public before the priority date of the invention. Therefore, the technical solution as claimed satisfies such a condition of patentability as "industrial applicability".

The device is implemented as follows.
- A tire 2 with a breaker 4 are formed integrally with side walls.
- A band of a tread 1 is cut according to the tyre circle perimeter.
- Anchoring bases 7 are inserted from the inside of the tread 1.
- A template (e.g. a paper band) is applied to the inside surface of the tread 1 and the template is perforated according to the vacuum cavities 11 of the anchoring bases within the tread 1.
- The template is marked according to the marks made on the tread 1.
- The template is applied to the tyre 2 and it is perforated according to the perforations made in the template.
- The tyre 2 is marked according to the marks on the template.
- The ends of the tread 1 are attached to one another (e.g. through hot patching), thus forming a circle with the inside surface diameter being equal (or slightly smaller) compared to the outside surface diameter of the tyre 2.
- The tyre 2 is cooled down and the entire tread 1 is heated. In such a state of both objects the tread 1 is drawn upon the surface of the tyre 2, providing a coincidence of the marks made on the tyre 2 and the ones made on the tread 1.
- After the temperatures of the tyre 2 and the tread 1 becoming equal vacuum clips 10 are applied against each other to the inside and the outside surfaces of the tyre 2, correspondingly, opposite the anchoring bases 7.
- The anchoring bases 7 and the vacuum clips 10 are pressed to the surfaces of the tyre 2 in order to prevent the air access through the adjacent walls of the anchoring bases 7, vacuum clips 10 and tyre surfaces 2.
- The air is removed out of the vacuum fastener cavities through a tube 13 of the vacuum clips 7, providing the engagement between the vacuum clips 6 parts and the surfaces of the tyre 2.
- The tubes 13 of the vacuum clips 7 for the air to be removed through are soldered (welded) not allowing the air return into the vacuum cavities 11 of the vacuum clips 6.
- The tread 1 is removed by its cutting up after providing the air access to the vacuum cavities 11 of the anchoring bases 7 and the cup-shaped vacuum clips 10 in a suitable manner.
- Before mounting a new tread 1 the state of the tyre 2 is inspected and its shape is restored according to the production requirements.

In such a way, the anchoring bases 7 are tightly arranged on the tread 1 thus preventing its movement over the surface of the tyre 2 and counteracting the centrifugal force tending to detach the tread 1 from the tyre 2. The use of the device allows to increase reliability of the fastening of a detachable tread 1 to a tyre 2 and to extend the service life of the tyre.

## Claims

1. A means for attaching a detachable tread to a pneumatic tyre in the form of an annular cover with alternating projections and depressions on the outside surface and a structure similar to the structure of a pneumatic tyre, comprising a breaker, a cord, **characterized in that** it is provided as a vacuum fastener consisting of two parts - an anchoring base having a housing which is embedded in the body of the tread and has a flange with an overall size equal to or exceeding the size of the cross section of the housing, wherein at its free end, the flange has the shape of any geometrical figure, while the end of the housing is arranged level with the inside surface of the tread or projecting beyond said surface until adjacent to the breaker and a cup-shaped vacuum clip, which is adjacent to the inside surface of the tyre, wherein the anchoring base and the cup-shaped vacuum clip are provided with vacuum cavities opening towards each other and interconnected through radial hole within the couples "anchoring base - cup-shaped vacuum clip", wherein the cavity of the latter is provided with a hermetic sealing means in the form of a pneumatic lock activated after removing the air out of the vacuum cavities of the anchoring base and the cup-shaped vacuum clip.

2. The means for attaching a detachable tread of claim 1, **characterized in that** the anchoring base is embedded in the body of the tread depressions.

3. The means for attaching a detachable tread of claim 1, **characterized in that** the anchoring base is embedded in the body of the tread projections.

4. The means for attaching a detachable tread of claim 1, **characterized in that** the anchoring base is embedded both in the body of the depressions and the projections of the tread in their optional combination.

5. The means for attaching a detachable tread of claim 1, **characterized in that** the anchoring base is embedded in the body of the tread projections or depressions along the tread pattern lines.

6. The means for attaching a detachable tread of claim 1, **characterized in that** said pneumatic lock is performed as a tube of flexible material configured to prevent the air access into said vacuum cavities after its mechanical deformation.

7. The means for attaching a detachable tread of claim 1, **characterized in that** said pneumatic lock is performed as a solid plug of flexible material configured to be pierced with a vacuum pump needle with subsequent covering of the piercing with flexible material after removing the air and the needle.

8. The means for attaching a detachable tread of claim 7, **characterized in that** said plug is performed in the form of a truncated cone converging toward the vacuum clip.

9. The means for attaching a detachable tread of claim 7, **characterized in that** said plug is performed with a shoulder at the outer end of the vacuum clip.

10. The means for attaching a detachable tread of claim 1, **characterized in that** said flange and the vacuum clip have projections mirrored on a plane, transversal to the vacuum fastener axis.

11. The means for attaching a detachable tread of claim 1, **characterized in that** the inner surfaces of the anchor base and the vacuum clip oriented to each other have a curved profile in the longitudinal section plane of the tyre.

12. The means for attaching a detachable tread of claim 1, **characterized in that** the outer surfaces of the anchor base and the vacuum clip are performed as texturized.
